# EUROPÄISCHE PATENTANMELDUNG

(11) **EP 2 239 276 A1**
(43) Veröffentlichungstag der Anmeldung: **13.10.2010**
(21) Anmeldenummer: 09004160.9
(22) Anmeldetag: 24.03.2009
(51) Int. Cl.: C08F 2/30

(54) **Verwendung nichtionischer Tenside als Emulgatoren für die Emulsionspolymerisation III**

(71) Anmelder: Cognis IP Management GmbH, 40589 Düsseldorf (DE)
(72) Erfinder: Scherer, Markus, 50733 Köln (DE); Schliwka, Thomas, 51427 Bergisch Gladbach (DE); Hömberg, Katharina, 40723 Hilden (DE); Held, Uwe, 42553 Velbert (DE); Mausberg, Thomas, 42781 Haan (DE); Klagge, Ronald, Dr., 40699 Erkrath (DE)

(57) **Zusammenfassung**

Verwendung wäßriger Lösungen nichtionischer Tenside als gelphasenfreie Emulgatorsysteme für die Emulsionspolymerisation, wobei man diese nichtionischen Tenside auswählt aus der Gruppe
(a) der Anlagerungsprodukte von 1 bis 40 mol Ethylen- und/oder Propylenoxid pro mol an Allylalkohol, und
(b) der Anlagerungsprodukte von 1 bis 40 mol Ethylen- und/oder Propylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.

## Beschreibung

### Gebiet der Erfindung

Die Erfindung betrifft die Verwendung spezieller Tenside als Emulgatoren für die Emulsionspolymerisation, ferner die unter Verwendung dieser Tenside herstellbaren Polymerdispersionen sowie ein Verfahren zur Herstellung dieser Polymerdispersionen.

### Stand der Technik

Bei der Emulsionspolymerisation handelt es sich um ein spezielles Verfahren der Polymerisation, bei dem gering wasserlösliche Monomere mit Hilfe von Emulgatoren in Wasser emulgiert und unter Verwendung wasserlöslicher Initiatoren wie Kaliumperoxodisulfat oder Redoxinitiatoren polymerisiert werden. Anionische und/oder nichtionische Tenside sind hierbei die wesentlichen Bestandteile. Über den Mizellaufbau in der wässrigen Lösung gewährleisten sie den Prozess der Emulsionspolymerisation.

Im Verlaufe von Emulsionspolymerisationsprozessen werden Tenside häufig mit Wasser verdünnt oder in eine wässrige Reaktionslösung eingebracht; die Tenside liegen dann in der für den Emulsionspolymerisationsprozeß erforderlichen Konzentration vor. Dabei durchlaufen die Tenside in der Regel einen weiten Konzentrationsbereich, insbesondere dann, wenn sie vorher als 100%ige-Systeme, d.h. wasserfrei vorliegen. Häufig wird hierbei im Temperaturbereich um 25°C gearbeitet. Viele Tenside zeigen in Abhängigkeit von der Temperatur und der Konzentration eine Mischungslücke mit Wasser. Das bedeutet, dass sie dort nicht in Wasser löslich sind, was sich durch die Bildung eines unlöslichen Gelblocks äußert, der ein sofortiges weiteres Verarbeiten der Reaktionsmischung verhindert. Dies ist ein äußerst unerwünschter Prozess.

### Beschreibung der Erfindung

Der vorliegenden Erfindung lag die Aufgabe zugrunde, wäßrige Tensidlösungen bereitzustellen, die sich als gelphasenfreie Emulgatorsysteme für die Emulsionspolymerisation eignen. Mit anderen Wortem bestand die zentrale Aufgabe, die durch die zu entwickelnden Emulgatorsysteme gelöst werden sollte, darin, das Auftreten von Gelphasen, die durch Zugabe von Tensiden oder wässrigen Tensidlösungen im Verlaufe von Emulsionspolymerisations-Prozessen ausgelöst werden, wirksam zu verhindern.

Der Einsatz derartiger Emulgatorsysteme in der Emulsionspolymerisation sollte im übrigen mit nur geringer Koagulatbildung verbunden sein.

Gegenstand der vorliegenden Erfindung ist zunächst die Verwendung wäßriger Lösungen nichtionischer Tenside als gelphasenfreie Emulgatorsysteme für die Emulsionspolymerisation, wobei man die nichtionischen Tenside auswählt aus der Gruppe
(a) der Anlagerungsprodukte von 1 bis 40 mol Ethylen- und/oder Propylenoxid pro mol an Allylalkohol, und
(b) der Anlagerungsprodukte von 1 bis 40 mol Ethylen- und/oder Propylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.

Überraschenderweise hat sich gezeigt, dass die nichtionischen Tenside, die ausgewählt sind aus der Gruppe
(a) der Anlagerungsprodukte von 1 bis 40 mol Ethylen- und/oder Propylenoxid pro mol an Allylalkohol, und
(b) der Anlagerungsprodukte von 1 bis 40 mol Ethylen- und/oder Propylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann, dadurch auszeichnen, dass ihre wäßrigen Lösungen Gelphasen-frei sind. Daher können diese nichtionischen Tenside bzw. deren wäßrige Tensidkonzentrate beliebig mit Wasser verdünnt werden, ohne dass in bestimmten Konzentrationsbereichen Gelphasen und dadurch bedingt wasserunlösliche Gelblöcke auftreten.

Im Hinblick auf die Verwendung wäßriger Lösungen nichtionischer Tenside als gelphasenfreie Emulgatorsysteme für die Emulsionspolymerisation, wobei man die nichtionischen Tenside auswählt aus den oben definierten Gruppen (a) und (b), gilt:
- In einer bevorzugten Ausführungsform wählt man die Tenside ausschließlich aus den Verbindungen der Klasse (a).
- In einer weiteren bevorzugten Ausführungsform wählt man die Tenside aussschließlich aus den Verbindungen der Klasse (b).
- In einer weiteren bevorzugten Ausführungsform wählt man die Tenside ausschließlich sowohl aus den Verbindungen der Klasse (a) als auch den Verbindungen der Klasse (b), man setzt also als Emulgatoren ausschließlich Mischungen der Verbindungen (a) und (b) ein.

Ein weiterer Gegenstand der vorliegenden Erfindung ist ein Verfahren zur Herstellung wäßriger Latices durch Emulsionspolymerisation, wobei im Verlaufe der Emulsionpolymerisation wäßrige Lösungen nichtionischer Tenside als gelphasenfreie Emulgatorsysteme eingesetzt werden, wobei man die nichtionischen Tenside auswählt aus der Gruppe
(a) der Anlagerungsprodukte von 1 bis 40 mol Ethylen- und/oder Propylenoxid pro mol an Allylalkohol, und
(b) der Anlagerungsprodukte von 1 bis 40 mol Ethylen- und/oder Propylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.
   In einer Ausführungsform des erfindungsgemäßen Verfahrens setzt man als Emulgatoren neben ein oder mehreren Tensiden aus der Gruppe der Verbindungen (a) und (b) als weitere Emulgatoren zusätzlich ein oder mehrere Tenside ein, die ausgewählt sind aus der Gruppe
(c) der Verbindungen der Formel R¹-O-X-R², wobei X ein Segment bedeutet, das aus 1 bis 40 miteinander verknüpften Ethylen- und/oder Propylenoxideinheiten aufgebaut ist und worin die Reste R1 und R2 unabhängig voneinander Alkylreste mit 1 bis 20 C-Atomen bedeuten, die jeweils gesättigt oder ungesättigt, geradkettig oder verzweigt sein können, mit der Maßgabe, dass die Reste R¹ und R² keine Allylreste sind,
(d) der Verbindungen der Formel R³-O-X-H, wobei X ein Segment bedeutet, das aus 1 bis 40 miteinander verknüpften Ethylen- und/oder Propylenoxideinheiten aufgebaut ist und worin R3 einen Alkylrest mit 1 bis 20 C-Atomen bedeutet, der gesättigt oder ungesättigt, geradkettig oder verzweigt sein kann, mit der Maßgabe, dass R³ kein Allylrest ist, und
(e) der Verbindungen der Formel H-O-X-H, wobei X ein Segment bedeutet, dass aus 1 bis 40 miteinander verknüpften Ethylen- und/oder Propylenoxideinheiten aufgebaut ist.

Die Verbindungen (a) bis (e) enthalten jeweils ein Segment, das aus 1 bis 40 miteinander verknüpften Ethylenoxideinheiten (EO) und/oder Propylenoxideinheiten (PO) aufgebaut ist. Dieses Segment kann entweder ausschließlich EO- oder ausschließlich aus PO-Einheiten aufgebaut sein. Es ist aber auch möglich, dass es sowohl aus EO- als auch aus PO-Einheiten besteht; in diesem Falle können die EO- bzw. PO-Einheiten statisch verteilt sein oder blockweise vorliegen. Die Synthese der Verbindungen (a) bis (e) kann nach allein dem Fachmann einschlägig bekannten Methoden erfolgen. Insbesondere gelten für die Einführung der EO/PO-Segmente die üblichen Techniken der Ethoxylierung bzw. Propoxylierung: Diese erfolgen in der Regel bei erhöhter Temperatur und erhöhtem Druck in Gegenwart von geeigneten Alkoxylierungskatalysatoren. Die Wahl des Alkoxylierungskatalysators beeinflusst dabei die sogenannte Homologenverteilung. So wird in Gegenwart der katalytisch wirkenden Alkalimetallalkoholate wie Natriumethylat eine breite Homologenverteilung erzielt, während beispielsweise in Gegenwart von Hydrotalcit als Katalysator eine stark eingeengte Homologenverteilung (sogenannte "narrow range"-Produkte) erzielt wird.

### Zu den Verbindungen (a)

Bei den Verbindungen (a) handelt es sich um Anlagerungsprodukte von 1 bis 40 mol Ethylen- und/oder Propylenoxid pro mol an Allylalkohol.

### Zu den Verbindungen (b)

Bei den Verbindungen (b) handelt es sich um Anlagerungsprodukte von 1 bis 40 mol Ethylen- und/oder Propylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.

### Zu den Verbindungen (c)

Bei den Verbindungen (c) handelt es sich um Verbindungen der Formel R¹-O-X-R², wobei X ein Segment bedeutet, das aus 1 bis 40 miteinander verknüpften Ethylen-und/oder Propylenoxideinheiten aufgebaut ist und worin die Reste R¹ und R² unabhängig voneinander Alkylreste mit 1 bis 20 C-Atomen bedeuten, die jeweils gesättigt oder ungesättigt, geradkettig oder verzweigt sein können, mit der Maßgabe, dass die Reste R¹ und R² keine Allylreste sind.

### Zu den Verbindungen (d)

Bei den Verbindungen (d) handelt es sich um Verbindungen der Formel R³-O-X-H, wobei X ein Segment bedeutet, das aus 1 bis 40 miteinander verknüpften Ethylen-und/oder Propylenoxideinheiten aufgebaut ist und worin R³ einen Alkylrest mit 1 bis 20 C-Atomen bedeutet, der gesättigt oder ungesättigt, geradkettig oder verzweigt sein kann, mit der Maßgabe, dass R³ kein Allylrest ist.

### Zu den Verbindungen (e)

Bei den Verbindungen (e) handelt es sich um Verbindungen der Formel H-O-X-H, wobei X ein Segment bedeutet, das aus 1 bis 40 miteinander verknüpften Ethylen-und/oder Propylenoxideinheiten aufgebaut ist.

Die erfindungsgemäß einzusetzenden Verbindungen aus der Gruppe (a) und (b) - gewünschtenfalls in Kombination mit Verbindungen aus der Gruppe (c), (d) und (e) - können als alleinige Emulgatoren (Primäremulgatoren) bei der Emulsionspolymerisation eingesetzt werden. Es ist jedoch auch möglich, sie zusammen mit ein oder mehreren anionaktiven, kationischen oder (weiteren, von den Verbindungen (a) bis (e) verschiedenen) nichtionischen Emulgatoren einzusetzen.

In einer bevorzugten Ausführungsform setzt man die erfindungsgemäßen nichtionischen Emulgatoren in Kombination mit anionischen Emulgatoren ein, insbesondere solchen, die ausgewählt sind aus der Gruppe der dem Fachmann bekannten Fettalkoholsulfate, Fettalkoholethersulfate, Sulfosuccinate, Alkylarylsulfonate, Alkylarylethersulfate, Alkylsulfate, Fettsäuresulfonate, Phosphatester, Olefinsulfate, Alkansulfonate, α-Sulfomonocarbonsäureester.

Die im Zuge des erfindungsgemäßen Verfahrens einzusetzenden Emulgatoren der Gruppe (a) und (b) - gewünschtenfalls in Kombination mit Verbindungen aus der Gruppe (c), (d) und (e) - werden - sofern sie während der Emulsionspolymerisation zugesetzt werden - in einer Menge von 0,5 bis 10 Gew.-%, vorzugsweise von 1 bis 5 Gew.-% und insbesondere von 1 bis 3 Gew.-% - die Gew.-%-Angaben sind jeweils bezogen auf die Gesamtmenge der bei der Emulsionspolymerisation eingesetzten Monomeren - eingesetzt.

Es kann aber auch gewünscht sein, die Emulsionspolymerisation in Gegenwart anderer Emulgatoren, die man insbesondere aus der Gruppe nichtionischer und/oder anionischer Tenside wählt, durchzuführen und ein oder mehrere Emulgatoren der Gruppe (a) und (b) - gewünschtenfalls in Kombination mit Verbindungen aus der Gruppe (c), (d) und (e) - erst nach Abschluss der Polymerisation den fertigen Latices zuzudosieren, wo sie dann im Sinne einer Nachstabilisierung der wäßrigen Latices wirken.

In einer weiteren Ausführungsform setzt man die Verbindungen der Gruppe (a) und (b) - gewünschtenfalls in Kombination mit Verbindungen aus der Gruppe (c), (d) und (e) - sowohl während der Emulsionspolymerisation, als auch nach der Emulsionspolymerisation ein. Dabei kann es gewünscht sein, die Verbindungen der Gruppe (a) und (b) - gewünschtenfalls in Kombination mit Verbindungen aus der Gruppe (c), (d) und (e) - in Mischung mit anderen Tensiden einzusetzen oder als alleinige Tenside. In einer Variante beginnt man die Emulsionspolymerisation in Gegenwart klassischer anionischer Tenside oder Mischungen klassischer anionischer und nichtionischer Tenside und setzt dann ein oder mehrere Emulgatoren der Gruppe (a) und (b) - gewünschtenfalls in Kombination mit Verbindungen aus der Gruppe (c), (d) und (e) - gegen Ende der Emulsionspolymerisation und zusätzlich nach dem Abschluss der Polymerisation ein; in dieser Variante wirken die Emulgatoren der Gruppe (a) und (b) - gewünschtenfalls in Kombination mit Verbindungen aus der Gruppe (c), (d) und (e) - zum einen als Emulgatoren während der Emulsionspolymerisation und zum anderen im Sinne einer Nachstabilisierung der wäßrigen Latices.

Zur Nachstabilisierung setzt man die Verbindungen der Gruppe (a) und (b) - gewünschtenfalls in Kombination mit Verbindungen aus der Gruppe (c), (d) und (e) - unabhängig davon, ob sie auch schon während der Emulsionspolymerisation eingesetzt werden in einer Menge von 0,1 bis 10 Gew.-%, vorzugsweise von 0,1 bis 5 Gew.-% und insbesondere von 0,1 bis 3 Gew.-% - die Gew.-%-Angaben sind jeweils bezogen auf die Gesamtmenge der bei der Emulsionspolymerisation eingesetzten Monomeren - ein.

Die Natur der Polymeren und Copolymeren in den wäßrigen Latices unterliegt an sich keinen besonderen Beschränkungen. Besonders bevorzugt sind jedoch Polymere bzw. Copolymere auf Basis folgender Monomer-Bausteine: Acrylsäure, Acrylsäureester, Butadien, Methacrylsäure, Methacrylsäureester, Styrol, Vinylacetat und Versaticsäurevinylester.

Ein weiterer Erfindungsgegenstand sind wäßrige Polymerdispersionen, erhältlich nach dem oben beschriebenen erfindungsgemäßen Verfahren.

### Beispiele

### Eingesetzte Substanzen:

**FA-30EO:** Anlagerungsprodukt von 30 mol Ethylenoxid an einen Fettalkohol (Disponil LS 30, Fa. Cognis)
**Breox I:** Ethylenoxid-Anlagerungsprodukt an Allylalkohol (Breox AA E 450 H, Fa. Cognis)
**Disponil AFX 3070:** modifizierter ethoxylierter Fettalkohol (Fa. Cognis)

### Beispiel 1 (erfindungsgemäß)

Eine Tensidmischung wurde durch Mischen folgender Komponenten hergestellt: 455 g FA-30EO und 195 g Breox I. Der Aktivsubstanzgehalt der Mischung betrug 100 %.
Zur Prüfung des Gelverhaltens wurde die erfindungsgemäße Tensidmischung bei 25°C kontinuierlich unter Rühren mit demineralisiertem Wasser verdünnt bis ihre Konzentration 30% betrug. Während des gesamten Verdünnungsvorgangs traten keine Gelphasen auf, d.h. die Tensidmischung blieb vollständig in Wasser gelöst; die wässrige Lösung zeigte keine Inhomogenitäten. Bei den in Tabelle 1 angegebenen Konzentrationen wurde jeweils eine Probe entnommen und in einem Temperaturbad langsam soweit abgekühlt, bis ihr Stockpunkt erreicht war. Tabelle 1 zeigt den Zusammenhang zwischen Konzentration K und dem Stockpunkt S.

**Tabelle 1**

| | | | | | | | | | | | | | | |
|---|---|---|---|---|---|---|---|---|---|---|---|---|---|---|
| Konz. [%] | 95 | 90 | 85 | 80 | 75 | 70 | 65 | 60 | 55 | 50 | 45 | 40 | 35 | 30 |
| Stockp. [°C] | 24 | 22 | 21 | 18 | 14 | 8 | 3 | -8 | -10 | -18 | -18 | -11 | -12 | -12 |

### Beispiel 2 (zum Vergleich)

300 g Disponil AFX 3070 wurden nach der Vorschrift in Beispiel 1 im Konzentrationsbereich von 65% bis 35% mit demineralisiertem Wasser verdünnt. Bei den in Tabelle 2 angegebenen Konzentrationen wurde eine Probe entnommen und wie in Beispiel 1 beschrieben auf ihren Stockpunkt hin untersucht. Tabelle gibt die entsprechenden Stockpunkte an. Im Konzentrationsbereich von ca. 60% bis ca. 40% zeigt die Lösung eine Mischungslücke, was durch Auftreten eines Gel-Blocks deutlich wurde.

**Tabelle 2**

| | | | | | |
|---|---|---|---|---|---|
| Konz. [%] | 70 | 60 | 50 | 40 | 30 |
| Stockp. [°C] | 8 | 24 | 32 | 25 | -6 |

### Eigenschaften der Latices

Der Einsatz der Emulgatoren gemäß Beispiel 1 hatte keinerlei negative Auswirkungen auf die Eigenschaften der bei ihrem Einsatz in der Emulsionspolymerisation hergestellten Latices. Dies war unabhängig von der Natur der zur Polymerisation eingesetzten Monomeren - geprüft wurden insbesondere Acrylat-, Styrol/Acrylat und VeoVa-Monomer-Systeme.

Weiterhin wurde beobachtet, dass die unter Verwendung der erfindungsgemäßen Tensidmischungen hergestellten Polymerdispersionen eine erhöhte Scherstabilität aufweisen.

## Patentansprüche

1. Verwendung wäßriger Lösungen nichtionischer Tenside als gelphasenfreie Emulgatorsysteme für die Emulsionspolymerisation, wobei man die nichtionischen Tenside auswählt aus der Gruppe
(a) der Anlagerungsprodukte von 1 bis 40 mol Ethylen- und/oder Propylenoxid pro mol an Allylalkohol, und
(b) der Anlagerungsprodukte von 1 bis 40 mol Ethylen- und/oder Propylenoxid pro mol an Alkylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.

2. Verfahren zur Herstellung wäßriger Latices durch Emulsionspolymerisation, wobei im Verlaufe der Emulsionpolymerisation wäßrige Lösungen nichtionischer Tenside als gelphasenfreie Emulgatorsysteme eingesetzt werden, wobei man die nichtionischen Tenside auswählt aus der Gruppe
(a) der Anlagerungsprodukte von 1 bis 40 mol Ethylen- und/oder Propylenoxid pro mol an Allylalkohol, und
(b) der Anlagerungsprodukte von 1 bis 40 mol Ethylen- und/oder Propylenoxid pro mol an Allylalkohol, wobei die OH-Gruppe dieser Anlagerungsprodukte endgruppenverschlossen ist in dem Sinne, dass sie durch eine Gruppe OR ersetzt ist, wobei R einen Alkylrest mit 1 bis 20 C-Atomen bedeutet, der gesättigt oder ungesättigt, geradkettig oder verzweigt sein kann.

3. Verfahren nach Anspruch 2, wobei man als Emulgatoren zusätzlich ein oder mehrere Tenside einsetzt, die ausgewählt sind aus der Gruppe
(c) der Verbindungen der Formel R¹-O-X-R², wobei X ein Segment bedeutet, das aus 1 bis 40 miteinander verknüpften Ethylen- und/oder Propylenoxideinheiten aufgebaut ist und worin die Reste R¹ und R² unabhängig voneinander Alkylreste mit 1 bis 20 C-Atomen bedeuten, die jeweils gesättigt oder ungesättigt, geradkettig oder verzweigt sein können, mit der Maßgabe, dass die Reste R¹ und R² keine Allylreste sind,
(d) der Verbindungen der Formel R³-O-X-H, wobei X ein Segment bedeutet, das aus 1 bis 40 miteinander verknüpften Ethylen- und/oder Propylenoxideinheiten aufgebaut ist und worin R3 einen Alkylrest mit 1 bis 20 C-Atomen bedeutet, der gesättigt oder ungesättigt, geradkettig oder verzweigt sein kann, mit der Maßgabe, dass R3 kein Allylrest ist, und
(e) der Verbindungen der Formel H-O-X-H, wobei X ein Segment bedeutet, das aus 1 bis 40 miteinander verknüpften Ethylen- und/oder Propylenoxideinheiten aufgebaut ist.

4. Verfahren nach Anspruch 2 oder 3, wobei man als Emulgatoren zusätzlich ein oder mehrere Tenside einsetzt, die ausgewählt sind aus der Gruppe der anionischen, kationischen und nichtionischen Tenside, wobei die nichtonischen Tenside von den Verbindungen (a) bis (e) verschieden sind.

5. Verfahren nach einem der Ansprüche 2 bis 4, wobei man die Tenside aus den Gruppen (a) und (b) während der Emulsionspolymerisation einsetzt und/oder im Anschluss an die Emulsionspolymerisation den Latices zur Nachstabilisierung zudosiert.

6. Verfahren nach einem der Ansprüche 2 bis 5, wobei man die bei der Emulsionspolymerisation eingesetzten Monomeren auswählt aus der Gruppe Acrylsäure, Acrylsäureester, Butadien, Methacrylsäure, Methacrylsäureester, Styrol, Vinylacetat und Versaticsäurevinylester.

7. Polymerdispersionen, erhältlich nach dem Verfahren gemäß einem der Ansprüche 2 bis 6.
